# EUROPEAN PATENT APPLICATION

(11) **EP 4 617 850 A1**
(43) Date of publication of application: **17.09.2025**
(21) Application number: 23903840.9
(22) Date of filing: 30.11.2023
(51) Int. Cl.: G06F 3/16, G10L 17/02, G10L 21/055, G10L 25/93, G06F 3/04842, G06F 3/0481, G06F 3/04847

(54) **ELECTRONIC DEVICE FOR ADJUSTING VOLUME FOR EACH SPEAKER, OPERATING METHOD THEREOF, AND STORAGE MEDIUM**

(30) Priority: 12.12.2022 KR 20220172738; 21.12.2022 KR 20220180935
(71) Applicant: Samsung Electronics Co., Ltd., Suwon-si, Gyeonggi-do 16677 (KR)
(72) Inventor: SHIN, Jaeyoung, Suwon-si, Gyeonggi-do 16677 (KR)
(74) Representative: Appleyard Lees IP LLP
(86) International application number: PCT/KR2023/019578
(87) International publication number: WO 2024/128637

(57) **Abstract**

According to an embodiment, an electronic device (101) may comprise: a display (360); a processor (320); and a memory (330) that stores instructions. According to an embodiment, the instructions may be configured, when executed by the processor, to have the electronic device identify a plurality of voice signals included in content. According to an embodiment, the instructions may be configured to have the electronic device identify a plurality of speakers within an image included in the content. According to an embodiment, the instructions may be configured to have the electronic device match the voice signals and the speakers, respectively. According to an embodiment, the instructions may be configured to have the electronic device receive a first user input with respect to a volume control object associated with a first speaker from among the speakers within the image displayed on the display. According to an embodiment, the instructions may be configured to have the electronic device adjust a volume with respect to the first speaker, and maintain a volume with respect to a second speaker from among the plurality of speakers.

## Description

### [Technical Field]

An embodiment of the disclosure relates to an electronic device for adjusting volume for each speaker, an operation method thereof, and a storage medium.

### [Background Art]

As a variety of services and additional functions provided through electronic devices, such as smartphones, gradually increase, various applications that may be run on electronic devices are being developed. Further, the hardware and/or software of electronic devices are continuously evolving.

For example, a camera application captures video (or moving image) using a camera equipped in an electronic device, and more and more users capture and enjoy videos using the camera application. Since a video and a sound (or audio) are recorded together when capturing a video (e.g., recording a video or audio) using the camera of the electronic device in various environments, the user may not identify the recording status before identifying the captured video. Therefore, if a user interface capable of controlling the volume level while enhancing the quality of video may be provided, user convenience may increase.

### [Detailed Description of the Invention]

### [Technical Solution]

According to an embodiment, an electronic device 101 may comprise a display 360, at least one processor 320, and memory 330 storing instructions. According to an embodiment, the instructions may be configured to, when executed by the at least one processor, cause the electronic device to identify a plurality of voice signals included in content. According to an embodiment, the instructions may be configured to identify a plurality of speakers in the video included in the content. According to an embodiment, the instructions may be configured to match the voice signals to the speakers, respectively. According to an embodiment, the instructions may be configured to receive a first user input for a volume control object related to a first speaker among speakers in the video displayed on the display. According to an embodiment, the instructions may be configured to, in response to the first user input, adjust a volume for the first speaker and maintain a volume for a second speaker among the plurality of speakers.

According to an embodiment, a method for adjusting a volume for each speaker in an electronic device may comprise identifying a plurality of voice signals included in content. According to an embodiment, the method may comprise identifying a plurality of speakers in the video included in the content. According to an embodiment, the method may comprise matching the voice signals to the speakers, respectively. According to an embodiment, the method may comprise receiving a first user input for a volume control object related to a first speaker among speakers in the video displayed on a display of the electronic device. According to an embodiment, the method may comprise, in response to the first user input, adjusting a volume for the first speaker and maintaining a volume for a second speaker among the plurality of speakers.

According to an embodiment, in a non-volatile storage medium storing instructions, the instructions may be configured to, when executed by at least one processor 320 of an electronic device 101, cause the electronic device to perform at least one operation. The at least one operation may comprise identifying a plurality of voice signals included in content, identifying a plurality of speakers in the video included in the content, matching the voice signals to the speakers, respectively, receiving a first user input for a volume control object related to a first speaker among speakers in the video displayed on a display of the electronic device; and in response to the first user input, adjusting a volume for the first speaker and maintaining a volume for a second speaker among the plurality of speakers.

### [Brief Description of Drawings]

FIG. 1 is a block diagram illustrating an electronic device in a network environment according to an embodiment;
FIG. 2 is a view illustrating a method for separating a voice signal in content according to an embodiment;
FIG. 3 is a block diagram illustrating an internal configuration of an electronic device according to an embodiment;
FIG. 4 is a flowchart illustrating operations of an electronic device for adjusting volume for each speaker according to an embodiment;
FIG. 5 is a flowchart illustrating a volume editing method for each speaker in an electronic device according to an embodiment;
FIG. 6 is a view illustrating an example of a volume editing method according to speaker selection according to an embodiment;
FIG. 7 is a view illustrating an example of voice information display for each of a selected speaker and an unselected speaker according to an embodiment;
FIG. 8A is a view illustrating an example before volume adjustment for a selected speaker according to an embodiment;
FIG. 8B is a view illustrating an example during muting for a selected speaker according to an embodiment;
FIG. 8C is a view illustrating an example before volume adjustment for another selected speaker according to an embodiment;
FIG. 9 is a view illustrating a method for setting the duration of an adjusted volume in a voice selection of a selected speaker according to an embodiment;
FIG. 10 is a view illustrating a method for setting the duration of a volume according to an embodiment;
FIG. 11 is an example view illustrating a method for separating a voice section of the same speaker to adjust volume according to an embodiment;
FIG. 12 is a view illustrating a volume setting method according to separation of a voice section of the same speaker according to an embodiment;
FIG. 13 is an example view illustrating an automatic adjustment method of a volume of a threshold or more according to an embodiment;
FIG. 14 is an example view illustrating an automatic adjustment method of a volume corresponding to a roar according to an embodiment;
FIG. 15 is a view illustrating an example of speaker tracking and voice information display according to speaker recognition according to an embodiment;
FIG. 16 is a view illustrating an example of voice information display according to edit target speaker selection according to an embodiment;
FIG. 17 is an example view illustrating a volume adjustment method for a selected speaker according to an embodiment;
FIG. 18 is a flowchart illustrating operations for volume adjustment using a voice section indicator for a selected speaker according to an embodiment;
FIG. 19 is an example view illustrating a volume adjustment method using a voice section indicator for a selected speaker according to an embodiment;
FIG. 20 is an example view illustrating a volume adjustment method using a video frame indicator according to an embodiment; and
FIG. 21 is an example view illustrating voice information display according to sequential selection of a speaker according to an embodiment.

The same or similar reference denotations may be used to refer to the same or similar elements throughout the specification and the drawings.

### [Mode for Carrying out the Invention]

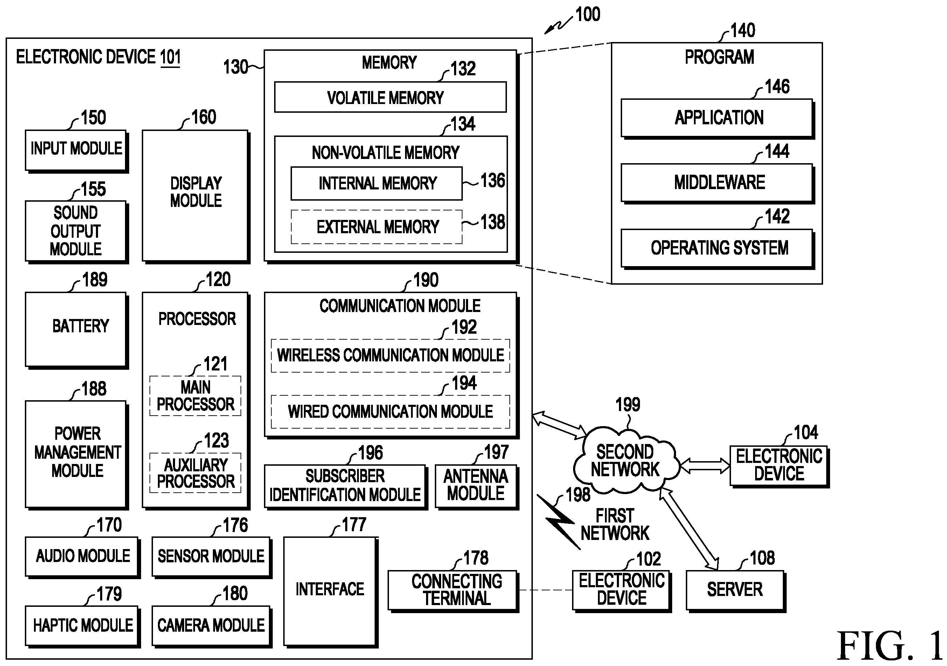

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

In the following description, the components easy to understand from the description of the above embodiments are denoted with or without the same reference numerals and their detailed description may be skipped. According to an embodiment of the disclosure, an electronic device 101 may be implemented by selectively combining configurations of different embodiments, and the configuration of one embodiment may be replaced by the configuration of another embodiment. However, it is noted that the present invention is not limited to a specific drawing or embodiment.

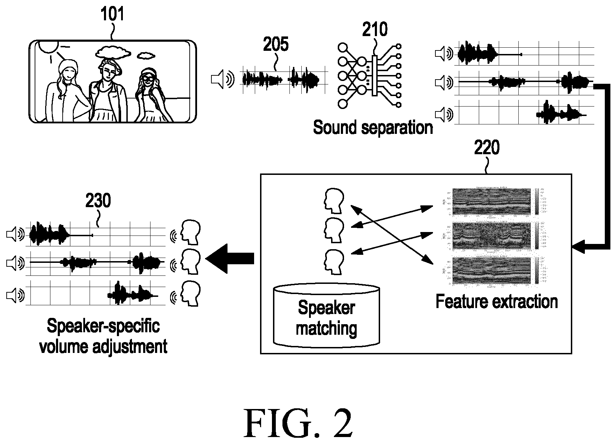

Before describing the present invention, a method for separating a voice signal in content, used in the present invention, is described with reference to FIG. 2. FIG. 2 is a view illustrating a method for separating a voice signal in content according to an embodiment.

The types of content provided by the electronic device 101 are diversifying, and the content may be, e.g., moving image content captured by the user, or video content such as TV shows or movies downloaded or streamed from at least one server (e.g., a content provider). In the following description, the content includes a visual video and an audible sound, and may be, e.g., content including video and an audio including a person. Here, the video may mean a moving image, and the voice may be described as audio or sound.

Referring to FIG. 2, when the electronic device 101 reproduces content, voice signals 205 including voices of a plurality of speakers included in the content may be output through a speaker. The voice signals 205 may be separated based on a sound separation technology 210. The electronic device 101 may identify the speaker through voice feature extraction for each of the separated voice signals and perform matching 220 to the identified speaker.

Specifically, the electronic device 101 may identify (or separate) each of the plurality of voice signals in the content, identify a speaker through face recognition in the video of the content, and match the identified voice signals to speakers, respectively, identified through face recognition. As such, the electronic device 101 may separate the voice signal in the content, and match the separated voice signal to the speaker in the video through learning such as deep learning. According to an embodiment, the electronic device 101 may perform an operation of adjusting 230 the volume for each speaker in the video by separating the voice signal for each speaker.

The electronic device according to an embodiment is for controlling the volume for the plurality of speakers in the video content, and more particularly, may provide a user interface capable of individually controlling the volume level for each speaker in the video. The electronic device provides the user interface capable of controlling the volume for each speaker, so that the user may easily adjust the volume for the desired speaker in the video to the desired volume for the desired section, thereby increasing user convenience.

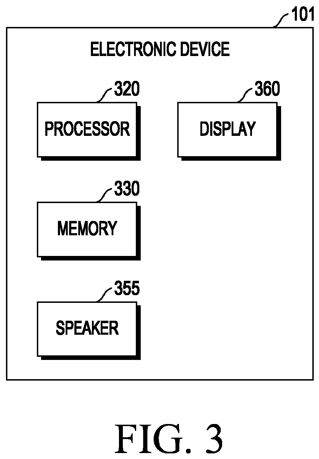

FIG. 3 is a block diagram illustrating an internal configuration of an electronic device according to an embodiment.

Referring to FIG. 3, the electronic device 101 may include a processor 320, memory 330, a display 360, and/or a speaker 355. The electronic device 101 of FIG. 3 may be the electronic device 101 of FIG. 1. Here, not all of the components illustrated in FIG. 3 are essential components of the electronic device 101, and the electronic device 101 may be implemented by more or less components than those illustrated in FIG. 3.

Referring to FIG. 3, the memory 330 may store a control program for controlling the electronic device 101, a UI related to an application downloaded from the outside or provided by the manufacturer, images, user information, documents, databases, or related data for providing the UI. For example, the memory 330 may store content including videos and audio. The content may be content captured through the execution of a camera application (e.g., a program or function) or content such as a TV show or movie downloaded or streamed from at least one server (e.g., a content provider). Further, the memory 330 may temporarily store at least some of the videos obtained to edit the speaker's volume in the captured video obtained in real-time through the camera application for the next video processing task. For example, at least some videos temporarily stored may be used to control the volume for each of the plurality of speakers, such as video conferencing. Therefore, while displaying the video conference video, the speaker in the video may be identified, and the voice signal for each speaker may be matched to the speaker and be displayed through a visualization process. Accordingly, the electronic device may perform volume control on each speaker in the video captured in real-time as well as stored content.

When a user request for volume editing for each speaker in the video is received under the control of the processor 320, the display 360 may display a user interface related to volume editing. For example, when the user selects an item (or menu) for content editing (e.g., volume editing for each speaker) displayed on the content playback screen or when executing a separate app for content editing, the display 360 may display the user interface related to the content editing.

According to an embodiment, the display 360 may display a user interface including objects representing volume control for each speaker in the video when content is edited. The object is a graphic element related to volume control, and may include, e.g., an indicator.

The speaker 355 may receive an electrical signal from the processor 320 to generate a sound and output the sound to the outside. The speaker 355 may output a sound signal according to content reproduction to the outside of the electronic device 101.

According to an embodiment, the processor 320 may reproduce content including a subject (e.g., a speaker), and may support volume editing for each speaker of the content. Content editing may be provided to the user in a web method or an app method. The web method may be a method where the user visits a web page provided by a server supporting content editing using the electronic device 101 to receive an editing function. The app method may be a method of receiving a function for editing content through an application installed and driven on the electronic device 101.

According to an embodiment, the processor 320 may extract video frames from the content and display the extracted video frames in the form of a preview along a timeline. For example, when editing content, the processor 320 may display a video reproduced on a portion of the display 360, and display video frames for the played video in the form of a preview on the rest of the portion except where the played video is displayed. According to an embodiment, the processor 320 may provide a function for the user to select a desired time or section among the video frames displayed along the timeline. For example, with the video frames displayed along the timeline, the user may select the desired time for the timeline, and the processor 320 may adjust the volume for the desired speaker from the selected time.

Further, the processor 320 may provide a user interface capable of adjusting the volume in relation to the speaker desired by the user for the selected time or section. For example, the processor 320 may display a region representing each speaker in the video so that the user may select a desired speaker from among the plurality of speakers in the video displayed on the display 360. When selecting any one of the regions, the processor 320 may display an object for volume control (or control) for the selected speaker on at least a portion of the display 360. If the user selects the object, the processor 320 may apply the adjusted volume as the volume for the desired speaker at the selected time or section. Further, the processor 320 may adjust the volume for the selected speaker among the speakers in the video and maintain the volume for the other speakers according to the selection of the object for the volume control. Likewise, when selecting another speaker among the speakers in the video, the processor 320 may adjust the volume for the selected other speaker and maintain the volume for the unselected speaker. On the other hand, in response to an input of releasing a selected region among the regions, the processor 320 may initialize the volume adjusted for the selected speaker to the original volume, e.g., a default volume. As described above, according to an embodiment, the user may easily and conveniently adjust the volume for a desired speaker in the video. As described above, examples of various types of user interfaces for controlling volume for each speaker in the video are described below.

According to an embodiment, an electronic device 101 may comprise a display 360, at least one processor 320, and memory 330 storing instructions. According to an embodiment, the instructions may be configured to, when executed by the at least one processor, cause the electronic device to identify a plurality of voice signals included in content, According to an embodiment, the instructions may be configured to, when executed by the at least one processor, cause the electronic device to identify a plurality of speakers in an video included in the content. According to an embodiment, the instructions may be configured to match the voice signals to the speakers, respectively. According to an embodiment, the instructions may be configured to, when executed by the at least one processor, cause the electronic device to receive a first user input to a volume control object related to a first speaker among speakers in the video displayed on the display. According to an embodiment, the instructions may be configured to adjust a volume for the first speaker and maintain a volume for a second speaker among the plurality of speakers in response to the first user input.

According to an embodiment, the instructions may be configured to maintain the volume for the first speaker and adjust the volume for the second speaker among the plurality of speakers in response to a second user input to a volume control object related to the second speaker.

According to an embodiment, the instructions may be configured to display regions respectively indicating the speakers in the video, and in response to an input for selecting one region among the regions, display a volume control object for adjusting a volume for a speaker corresponding to the region on at least a portion of the display.

According to an embodiment, the instructions may be configured to, in response to an input for releasing selection of one region among regions respectively indicating the speakers in the video, initialize an adjusted volume for the first speaker to a default volume.

According to an embodiment, the instructions may be configured to display frames of the video on at least a portion of the display along a timeline, and adjust the volume for the first speaker from a time selected on the timeline.

According to an embodiment, the instructions may be configured to display a voice section indicator indicating at least a portion of a voice section of the first speaker on the timeline, and set a voice adjustment section of the first speaker based on an input of dragging the voice section indicator.

According to an embodiment, the instructions may be configured to identify a video frame section including the first speaker among frames of the video displayed along the timeline, and adjust the volume for the first speaker for the video frame section including the first speaker.

According to an embodiment, the instructions may be configured to, when releasing the input of dragging the voice section indicator on the timeline, identify whether a time indicated by the voice section indicator falls outside a video frame section including the first speaker, and when the time indicated by the voice section indicator falls outside the video frame section including the first speaker, set, up to a last frame of video frames including the first speaker, to a voice adjustment section of the first speaker.

According to an embodiment, the instructions may be configured to, in response to an input of separating a video frame section including the first speaker, adjust the volume for the first speaker for at least a portion of a video frame section including the first speaker, and maintain the volume for the first speaker for a rest of the video frame section including the first speaker.

According to an embodiment, the instructions may be configured to compare a volume for each of the speakers with a threshold in response to selection of an automatic volume adjustment function, and adjust a volume exceeding the threshold to a designated volume.

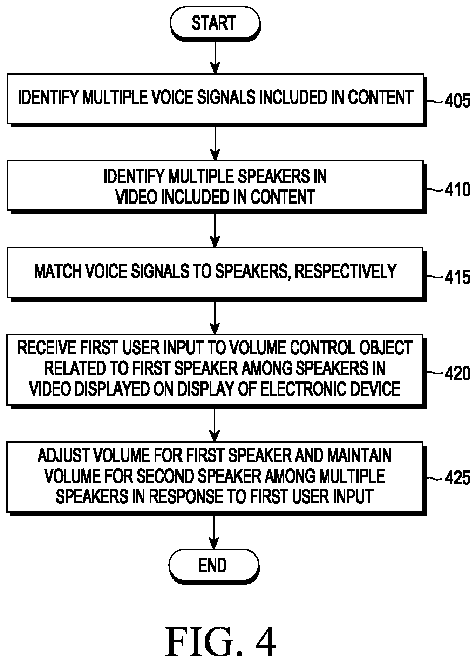

FIG. 4 is a flowchart illustrating operations of an electronic device for adjusting volume for each speaker according to an embodiment. Referring to FIG. 4, the operation method may include operations 405 to 425. Each operation of the operation method of FIG. 4 may be performed by at least one processor (e.g., the processor 120 of FIG. 1 and the processor 320 of FIG. 3) of an electronic device (e.g., the electronic device 101 of FIGS. 1 and 3). In an embodiment, at least one of operations 405 to 425 may be omitted or changed in order or may add other operations.

According to an embodiment, the content selected by the user may be content stored in the electronic device 101 or content positioned in an external server other than the electronic device 101. According to an embodiment, the electronic device 101 may enter the content editing mode in response to the content editing request. For example, when an input by an execution icon (e.g., object, graphic element, menu, button, or shortcut image) indicating an application for content editing is received or a selection input for an editing menu on a content playback screen is received, the electronic device 101 identifies that there is an editing request, and may execute the content editing application or enter the content editing mode. According to the execution of the content editing application or in the content editing mode, the electronic device 101 may provide a function for changing the speaker volume setting on the video playback screen (or preview screen).

In operation 405, the electronic device 101 may identify a plurality of voice signals included in the content. For example, the electronic device 101 may extract voice features through voice separation technology as described in FIG. 2 and separate the plurality of voice signals from the content accordingly.

In operation 410, the electronic device 101 may identify the plurality of speakers in the video included in the content. For example, the electronic device 101 may perform speaker recognition using deep learning.

In operation 415, the electronic device 101 may match the voice signals and the speakers, respectively. For example, the electronic device 101 may visually separate a voice matching the recognized face in the image and visually display items related to volume control for each speaker.

In operation 420, the electronic device 101 may receive a first user input to the volume control object related to the first speaker among the speakers in the video displayed on the display of the electronic device. In operation 425, in response to the first user input, the electronic device 101 may adjust the volume for the first speaker and maintain the volume for the second speaker among the plurality of speakers.

According to an embodiment, the electronic device 101 may maintain the volume for the first speaker and adjust the volume for the second speaker among the plurality of speakers in response to a second user input to a volume control object related to the second speaker.

According to an embodiment, the electronic device 101 may display regions respectively indicating the speakers in the video, and in response to an input for selecting any one region among the regions, display a volume control object for adjusting a volume for a speaker corresponding to the region on at least a portion of the display.

According to an embodiment, the electronic device 101 may, in response to an input for releasing selection of any one region among regions respectively indicating the speakers in the image, initialize an adjusted volume for the first speaker to a default volume.

According to an embodiment, the electronic device 101 may display frames of the video on at least a portion of the display along a timeline, and adjust the volume for the first speaker from a time selected on the timeline.

According to an embodiment, the electronic device 101 may display a voice section indicator indicating at least a portion of a voice section of the first speaker on the timeline, and set a voice adjustment section of the first speaker based on an input of dragging the voice section indicator.

According to an embodiment, the electronic device 101 may identify a video frame section including the first speaker among frames of the video displayed along the timeline, and adjust the volume for the first speaker for the video frame section including the first speaker.

According to an embodiment, the electronic device 101 may, in response to an input of separating a video frame section including the first speaker, adjust the volume for the first speaker for at least a portion of a video frame section including the first speaker, and maintain the volume for the first speaker for a rest of the video frame section including the first speaker.

According to an embodiment, the electronic device 101 may compare a volume for each of the speakers with a threshold in response to selection of an automatic volume adjustment function, and adjust a volume exceeding the threshold to a designated volume.

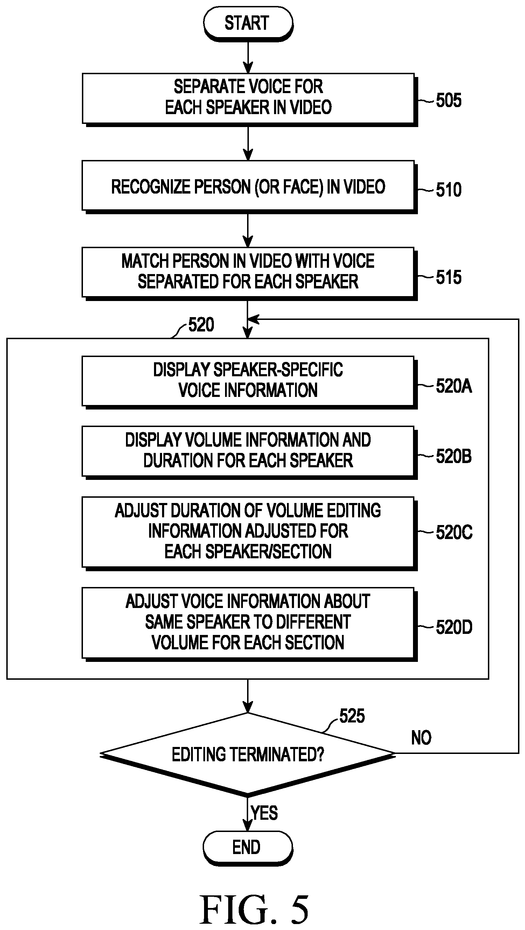

FIG. 5 is a flowchart illustrating a volume editing method for each speaker in an electronic device according to an embodiment.

Referring to FIG. 5, in operation 505, the electronic device 101 may perform speaker-specific voice separation in the video. In operation 510, the electronic device 101 may recognize a person (or a face) in the video. In operation 515, the electronic device 101 may match the separated voice for each speaker with the person in the video. In operation 520, the electronic device 101 may perform an operation of adjusting the volume for each speaker. According to an embodiment, the method of adjusting the volume for each speaker may include at least one of a method 520A of displaying speaker-specific voice information, a method 520B of displaying speaker-specific volume information and duration, a method 520C of adjusting the duration of volume editing information adjusted for each speaker/section, and a method 520D of adjusting the voice information about the same speaker to a different volume for each section. In operation 525, the electronic device 101 may identify whether the editing is terminated, and return to operation 520 to perform the above-described editing operation unless the editing is terminated.

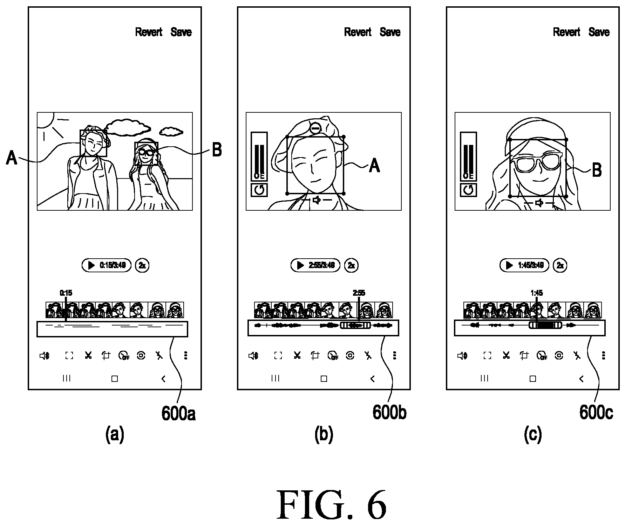

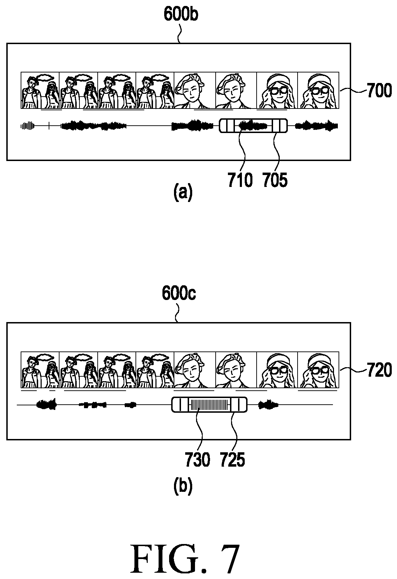

In an embodiment, the method 520A of displaying the speaker-specific voice information may be a method of displaying the speaker-specific voice information recognized on the video preview screen, with it visually distinct. For example, because each speaker has a different utterance speed or volume, the object (or graphic elements, symbols) representing the current volume for each speaker may be represented using a different color or signal waveform size to visually indicate the volume in which the speaker makes an utterance. An example of a user interface for the method 520A of displaying the speaker-specific voice information is described with reference to FIGS. 6 and 7.

FIG. 6 is a view illustrating an example of a volume editing method according to speaker selection according to an embodiment.

When there are a plurality of subjects in the video, since the subject disclosed in the disclosure is assumed to be a person, it is necessary to determine which of the several subject persons the volume adjustment is to be performed for. In an embodiment, the subject may be configured to be designated by the user.

The electronic device 101 may detect a face region in the video, and may present the detected face regions as a subject candidate group. As illustrated in FIGS. 6A to 6C, guide boxes may be displayed to represent subject candidate groups, and the guide boxes may be regions including the faces of the subject persons, respectively. The user may designate a subject (e.g., a desired speaker) subject to volume control by selecting a guide box.

Meanwhile, an example of determining regions including the face of a subject person through face region detection for the entire video has been described, but a portion of the video, i.e., face region detected as the user designates a specific region of the video, as a subject region, and then performs detection on the face region in the designated subject region, may be suggested as a subject candidate group. Further, after performing face detection on the entire video, the detected face regions may be designated as a subject candidate group, and then the face regions corresponding to the subject candidate group may be tracked.

Referring to FIG. 6(a), the electronic device 101 may display speakers A and B matching the voice in the speaker in the preview screen of the image. For example, when speakers A and B are identified through face recognition and voice separation, voice information for each of speakers A and B may be visually displayed using an object (or graphic element as in 600a. When speaker A is selected in the video preview screen as illustrated in FIG. 6(b), voice information about speaker A may be visually displayed using an object (or graphic element) as in 600b. Further, when speaker B is selected in the video preview screen as illustrated in FIG. 6 (c), voice information about speaker B may be visually displayed using an object (or graphic element) as in 600c.

FIG. 7 is a view illustrating an example of displaying voice information for each of a selected speaker and a non-selected speaker according to an embodiment. When the object as in 600b and the object as in 600c are enlarged and displayed, they may be shown as illustrated in FIG. 7(a) and FIG. 7(b), respectively.

The speaker A's voice information selected in FIG. 7(a) may display a bar-shaped object (or graphic element) 705 adjacent to video frames 700 displayed along the timeline. The bar-shaped object 705 may include voice information about the selected speaker A, e.g., a graphic element 710 indicating the utterance speed or volume in the form of a signal waveform. In an embodiment, the bar-shaped object 705 may be referred to as a voice section indicator indicating at least a portion of the speaker A's voice section selected on the timeline. In the case, voice information about the unselected speaker B may also be displayed in a section where the unselected speaker B appears in the video frames 700. If the selected speaker A and the unselected speaker B appear simultaneously in the video frames 700 and make an utterance, voice information about each of the selected speaker A and the unselected speaker B may be displayed together. In the case, the voice information about the selected speaker A may be visually displayed using the bar-shaped object 705 to be visually noticeable compared to the voice information about the selected speaker B. The size (or length) of the bar-shaped object 705 in FIG. 7(a) may correspond to the length of the section where the selected speaker A appears in the video frames. Here, the section where the selected speaker A appears may mean a section where the face-recognized speaker A is present in the video frames and the speaker A makes an utterance.

As described above, the voice information about speaker B selected in FIG. 7(b) may display the bar-shaped object (or graphic element) 725 adjacent to the video frames 720 displayed along the timeline. The voice section of the selected speaker B may be displayed using the bar-shaped object 725 to correspond to the section where the selected speaker B appears in the video frames 720. The bar-shaped object 725 may include voice information about the selected speaker B, e.g., a graphic element 730 indicating the utterance speed or volume in the form of a signal waveform.

In an embodiment, an example where voice information about a selected speaker is represented using a bar-shaped object and a signal waveform is described, but the form of an object (graphical element or symbol) for representing voice information about the selected speaker may not be limited thereto.

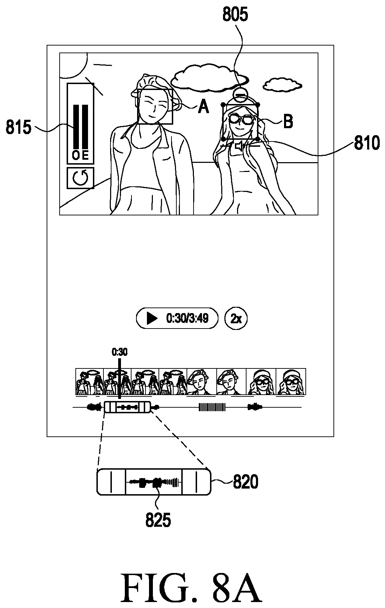

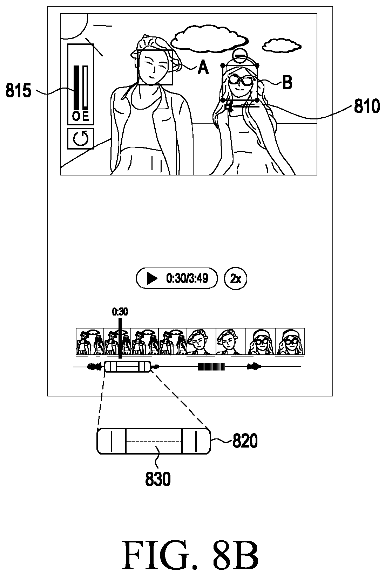

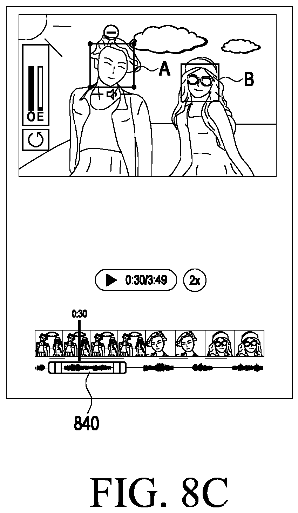

In an embodiment, the method 520B of displaying volume information and duration for each speaker may be a method of visually displaying a section where the selected speaker's voice is present together with volume information adjusted for the selected speaker when the plurality of speakers appear on the video preview screen. An example of a user interface regarding the method 520B of displaying volume information and duration for each speaker is described with reference to FIGS. 8A to 8C. FIG. 8A is a view illustrating an example before volume adjustment for a selected speaker according to an embodiment. FIG. 8B is a view illustrating an example during muting for a selected speaker according to an embodiment. FIG. 8C is a view illustrating an example before volume adjustment for another selected speaker according to an embodiment.

Referring to FIG. 8A, the electronic device 101 may display guide boxes (or regions) for representing subject candidate groups corresponding to the faces, i.e., speakers, detected through face recognition at the positions corresponding to the faces, respectively, in the video. The user selection for the guide box for speaker B may serve to call the volume control bar of the selected speaker B. For example, when the user selects a guide box for speaker B, a bar-shaped object 810 for controlling volume may be displayed. Further, after selecting the guide box, an object 805 to deselect speaker B may be displayed along with a bar-shaped object 810 for adjusting volume. Further, in response to selection of the guide box of speaker B, the section (or time) where voice information about speaker B is present may be visually displayed.

For example, the user may adjust the volume level by dragging the bar-shaped object 810 to the left or right while touching it, and when selecting the object 805 for deselection, the volume adjustment operation for speaker B may be terminated. If an input for deselecting speaker B is received, the electronic device 101 may initialize the volume adjusted for speaker B to the original volume, e.g., the default volume.

According to an embodiment, an object 815 indicating the volume level may be displayed in relation to the object 805 for adjusting volume. As the volume height is adjusted using the object 805 for adjusting volume, the height of the volume level edited (or adjusted) with respect to the original volume level included in the object 815 may be varied so that the user may intuitively recognize volume adjustment.

For example, as illustrated in FIG. 8B, if the voice for speaker B is muted using object 805 for adjusting volume, the object 815 in which the height of the volume level edited (or adjusted) with respect to the original volume level has been decreased may be displayed. Further, the voice section of the selected speaker B may be displayed using the bar-shaped object 820 to correspond to the section where the selected speaker B appears in the video frames. In the case, as the voice for speaker B is muted, a signal waveform 830 having no change in magnitude may be displayed on the object 820 representing the voice section. For example, if a signal waveform that changes in magnitude according to the speaker's voice was displayed before muting, a waveform with no change in magnitude, such as a dashed line, may be displayed after muting.

According to an embodiment, a function of setting the duration indicating how long the volume adjustment for the selected speaker B is to continue may be provided. For example, as illustrated in FIG. 8A, voice information about the selected speaker B may be represented using bar-shaped objects 820 and signal waveforms 825 to correspond to the section where speaker B appears. If the user selects the guide box for speaker A, as illustrated in FIG. 8C, the bar-shaped object 840 may be visually displayed so that the section (or time) where the voice information about speaker A is present corresponds to the section where speaker A appears in the video frames. According to an embodiment, the object 820 when speaker B in FIG. 8A is selected and the object 840 when speaker A in FIG. 8C is selected may be visually displayed to indicate an association relationship with each of the selected speakers. For example, objects (or graphic elements, symbols) for speaker A and speaker B, respectively, may be represented to be visually distinct from each other using different colors.

Meanwhile, in an embodiment, an example in which the signal waveforms 825 and 830 are varied in magnitude before changing the volume for the selected speaker B in FIG. 8A and after changing the volume in FIG. 8B, respectively, has been described. However, the values of various graphic elements such as the color or transparency (opacity) of the object 820 representing the voice section may be changed, and the visual display method may not be limited thereto. For example, the form of an object (graphical element or symbol) that allows the user to intuitively perceive a volume adjustment circumstance visually may not be limited to this.

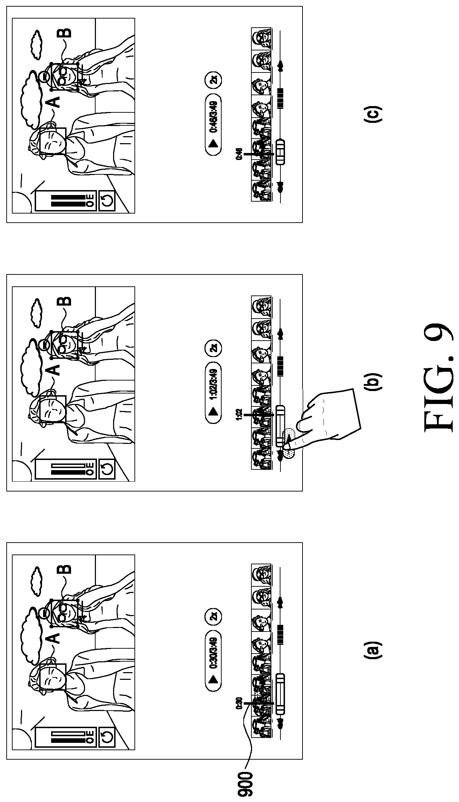

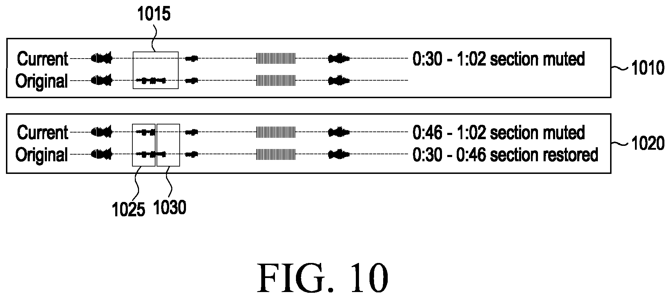

In an embodiment, the method 520C of adjusting the duration of the volume editing information adjusted for each speaker/section may be a method of displaying a volume adjustment section (e.g., duration) for a selected speaker using the timeline where video frames are displayed. For example, the user may set the duration to maintain the volume adjusted for the selected speaker for a desired interval. An example of a user interface for the method 520C of adjusting the duration of the volume editing information adjusted for each speaker/section is described with reference to FIGS. 9 and 10. FIG. 9 is a view illustrating a method for setting the duration of an adjusted volume in a voice selection of a selected speaker according to an embodiment. FIG. 10 is a view illustrating a method for setting the duration of a volume according to an embodiment.

If speaker B is selected as illustrated in FIG. 9(a), the electronic device 101 may identify an video frame section including speaker B in the video frames displayed along the timeline. The electronic device 101 may provide a function of adjusting the volume of speaker B for the video frame section where speaker B is included (or appears). To that end, the electronic device 101 may indicate a start time of the section where speaker B appears in the video frames using the video frame indicator 900. For example, assuming that the section where speaker B appears in the video frames is from a first time (e.g., 0:30 seconds) to a second time (e.g., 1:02 seconds), if speaker B's voice is muted using the volume adjustment bar, the duration from the first time (e.g., 0:30 seconds) to the second time (e.g., 1:02 seconds) may be muted. For example, 1010 of FIG. 10 illustrates an example of comparing the original voice information about the selected speaker B with the muted voice information. A look at the volume adjustment section 1015 from the first time (e.g., 0:30 seconds) to the second time (e.g., 1:02 seconds), as illustrated in 1010 of FIG. 10, reveals that, as compared with the original voice information, if the selected speaker B's voice is muted in the volume adjustment section 1015, a form of voice information where no signal waveform is output may be displayed.

According to an embodiment, the section where the volume is adjusted in the section where speaker B appears may be changed according to the user setting. For example, according to a user input for adjusting the length of the bar-shaped object representing the voice section as illustrated in FIG. 9(b), the length of the bar-shaped object may be reduced to decrease the volume adjustment section of speaker B as illustrated in FIG. 9(c). For example, if the length of the bar-shaped object representing the voice section is adjusted, the start time may be changed from the first time (e.g., 0:30 seconds) to the third time (e.g., 0:46 seconds), so that the duration from the third time (e.g., 0:46 seconds) to the second time (e.g., 1:02 seconds) may be muted as illustrated in FIG. 9(c).

For example, as illustrated in 1020 of FIG. 10, if the start time is changed from the first time (e.g., 0:30 seconds) to the third time (e.g., 0:46 seconds), so that the voice of the selected speaker B is muted from the third time (e.g., 0:46 seconds) to the second time (e.g., 1:02 seconds), the voice in the section 1025 from the first time (e.g., 0:30 seconds) to the third time (e.g., 0:46 seconds) may be restored to the original volume as if the same signal waveform is displayed when compared to the original voice information. On the other hand, in the section 1030 from the third time (e.g., 0:46 seconds) to the second time (e.g., 1:02 seconds), a form of voice information where the signal waveform is not output may be displayed compared to the original voice information.

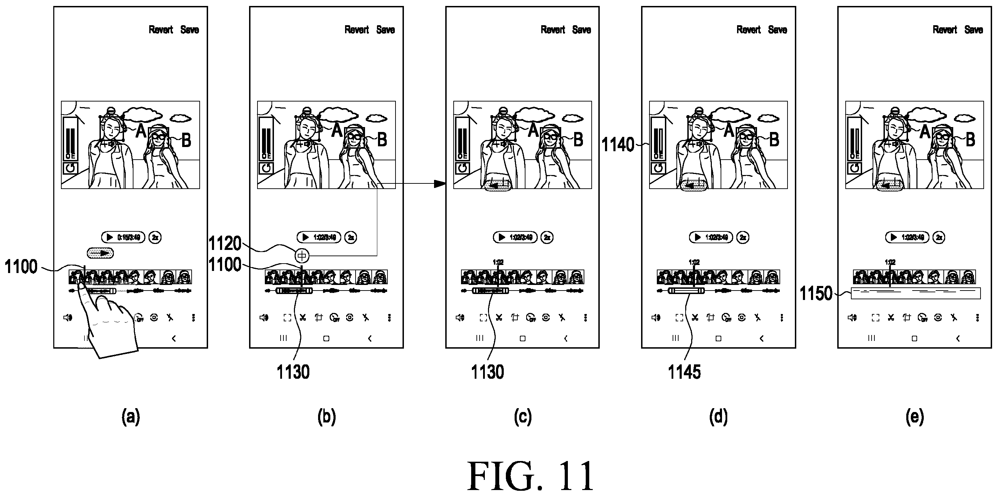

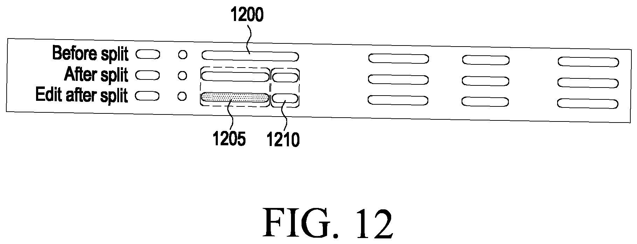

In an embodiment, the method 520D of adjusting the voice information about the same speaker to a different volume for each section may be a method of displaying a volume adjustment section (e.g., duration) for the speaker using the timeline where video frames are displayed. For example, the user may separate the voice section of the same speaker and set a different volume for each section. An example of a user interface for the method 520D of adjusting the voice information about the same speaker to a different volume for each section is described with reference to FIGS. 11 and 12. FIG. 11 is an example view illustrating a method for separating a voice section of the same speaker to adjust volume according to an embodiment. FIG. 12 is a view illustrating a volume setting method according to separation of a voice section of the same speaker according to an embodiment.

FIG. 11(a) illustrates a state where speaker A is selected. Assuming that the section where speaker A appears in the video frames is a section from a first time (e.g., 0:15 seconds) to a second time (e.g., 1:32 seconds), voice information about speaker A may be separated for each section. For example, as illustrated in FIG. 11(a), a video frame indicator 1100 may be touched and dragged and, as illustrated in FIG. 11(b), an object 1120 for section separation may be displayed. In response to selection of the object 1120 for section separation, the electronic device 101 may separate a section (e.g., a section from the first time (e.g., 0:15 seconds) to the second time (e.g., 1:32 seconds) where speaker A appears with respect to the video frame indicator 1100 indicating the third time (e.g., 1:02 seconds).

The level of the volume may be adjusted while touching the bar-shaped object for volume adjustment in the section-separated state, and if the volume is reduced from 100 to 0 using the bar-shaped object for volume adjustment, the waveform in the object 1130 representing the voice section where the volume level is set to 100 in FIG. 11(c) may be displayed in a state where there is no signal waveform as in the object 1145 illustrated in FIG. 11(d), and the height of the volume level edited (or adjusted) with respect to the original volume level included in the object 1140 representing the volume level may be varied. Further, as illustrated in FIG. 11(e), the video frame indicator 1100 may be displayed to indicate that the section is separated with respect to the third time (e.g., 1:02 seconds) in the voice information section 1150 of each speaker.

Referring to FIG. 12, when the section before separating the voice information section for the same speaker (e.g., from 0:15 seconds to 1:32 seconds) is 1200, the section may be separated into a first section (e.g., from 0:15 seconds to 1:02 seconds) and a second section (e.g., from 1:02 seconds to 1:32 seconds). For example, the electronic device 101 may adjust the volume for the speaker for at least a partial section (e.g., the first section (e.g., from 0:15 seconds to 1:02 seconds)) of the video frame section including the speaker, and maintain the volume for the speaker for the remaining section (e.g., the second section (e.g., 1:02 seconds to 1:32 seconds) of the video frame section including the speaker.

According to an embodiment, the first section (e.g., from 0:15 seconds to 1:02 seconds) 1205 and the second section (e.g., from 1:02 seconds to 1:32 seconds) 1210 are voice information sections for the same speaker, but may be set to have different volume levels and durations.

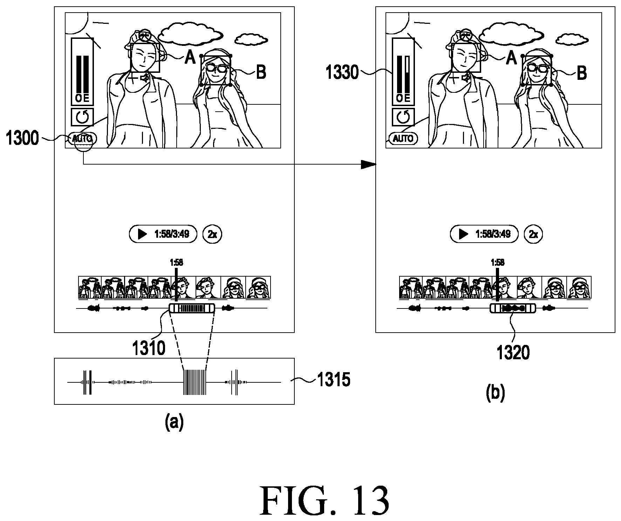

FIG. 13 is an example view illustrating an automatic adjustment method of a volume of a threshold or more according to an embodiment.

According to an embodiment, the electronic device 101 may analyze the voice signal separated from the content, and may compare the magnitude, i.e., volume, of the voice signal with a threshold. When a voice corresponding to a volume larger than the threshold is detected, the electronic device 101 may perform an operation of lowering the volume so that the volume larger than or equal to the threshold falls within a designated range.

In an embodiment, an automatic volume adjustment function may be provided, and whether to activate the automatic volume adjustment function may be determined according to user settings. For example, as illustrated in FIG. 13(a), in response to the user selection of the object 1300 representing the automatic volume adjustment function, the automatic volume adjustment function may be activated. In response to selection of the automatic volume adjustment function, the electronic device 101 may compare the volume for each speaker with a threshold, and lower the volume exceeding the threshold to a designated volume. Further, as illustrated in FIG. 13(a), when any one speaker A among the plurality of speakers is selected, the volume for the selected speaker A may be compared with the threshold, and when the volume of the selected speaker A exceeds the threshold in selected by the signals 1315 in the signals 1315 within the voice information section, the volume exceeding level circumstance may be alerted by changing the graphic element of the object 1310 representing the voice information section. If the object 1300 representing the automatic volume adjustment function is selected, the electronic device 101 may lower the volume of the selected speaker A exceeding the threshold to a designated volume. As the automatic volume adjustment function is activated, as the object 1330 in which the height of the volume level edited (or adjusted) with respect to the original volume level has been decreased may be displayed as illustrated in FIG. 13(b), the volume exceeding level in FIG. 13(a) may be lowered to a designated volume level. For example, when the volume of a specific section is higher than a threshold (e.g., 90 dB), the electronic device 101 may lower the volume level to a section average (e.g., 76 dB).

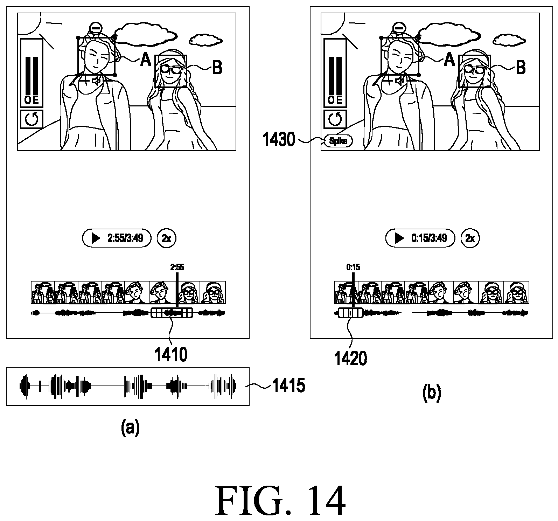

FIG. 14 is an example view illustrating an automatic adjustment method of a volume corresponding to a roar according to an embodiment.

Referring to FIG. 14(a), there may be a section where a spike (or roar) occurs due to the surrounding audio signal in addition to the case where the speaker's volume exceeds the threshold in the signals 1415 in the voice information section. In the case, a spike (or roar) occurrence circumstance may be alerted by changing the graphic element of the object 1410 indicating the voice information section. For example, the electronic device 101 may represent the section where the spike (or roar) occurs using a video frame indicator as illustrated in FIG. 14(b), and the automatically adjusted level may be represented using the object 1420.

Meanwhile, an example of lowering the volume exceeding the threshold for a selected speaker has been described above, but the present invention may also be applied when adjusting the volume to an average volume level when the volume of the selected speaker is as low as less than a specific threshold.

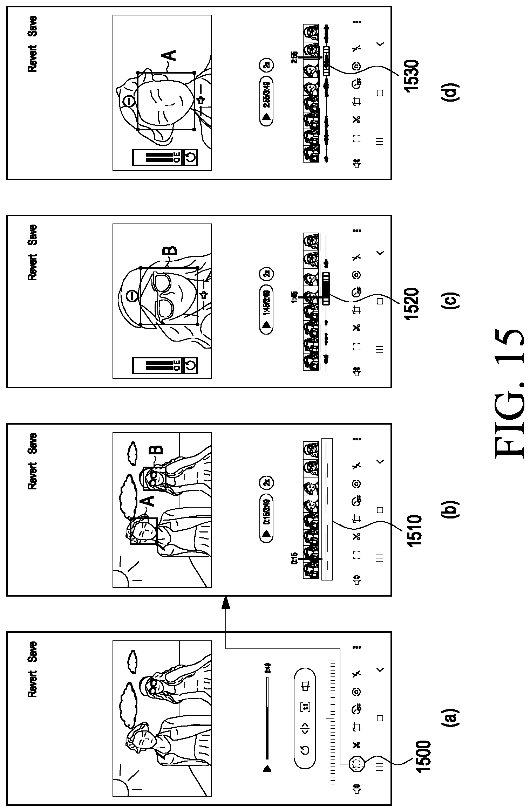

FIG. 15 is a view illustrating an example of speaker tracking and voice information display according to speaker recognition according to an embodiment.

In FIG. 15(a), in response to the selection of the object 1500 for entering the volume editing mode, the electronic device 101 may track and display the region indicating the speaker recognized through face or person recognition in the video and the recognized speaker as illustrated in FIG. 15(b). Here, the electronic device 101 may identify a region corresponding to a subject candidate group (e.g., speaker) in the video and a section where the subject candidate group is present in the video frames through face detection, alignment, face recognition, and/or face tracking in the video included in the content. Further, the electronic device 101 may identify the plurality of voice signals included in the content and perform voice separation corresponding to the section where the subject candidate group is present to match the voice corresponding to each speaker in the video.

Referring to FIG. 15(b), the electronic device 101 may display a speaker recognition result using regions (or guide boxes) representing the recognized faces, respectively, and display that voice is being output for each speaker using graphic elements of different colors in the voice information section 1510. For example, the color of the region (or guide box) indicating each speaker of FIG. 15(b) may be matched to the color in the voice information section 1510 of each speaker. As illustrated in FIG. 15(c), when speaker B is selected, the color of the guide box representing speaker B may be the same as the color of the bar-shaped object 1520 representing the voice information section. Likewise, as illustrated in FIG. 15(d), when speaker A is selected, the color of the guide box representing speaker A may be the same as the color of the bar-shaped object 1530 representing the voice information section. As illustrated in FIG. 15(b) to FIG. 15(c), even when the appearing speaker changes, the angle of view for the speaker changes, or the composition changes, the electronic device 101 may display a region (or guide box) indicating the speaker on the speaker's face through face tracking.

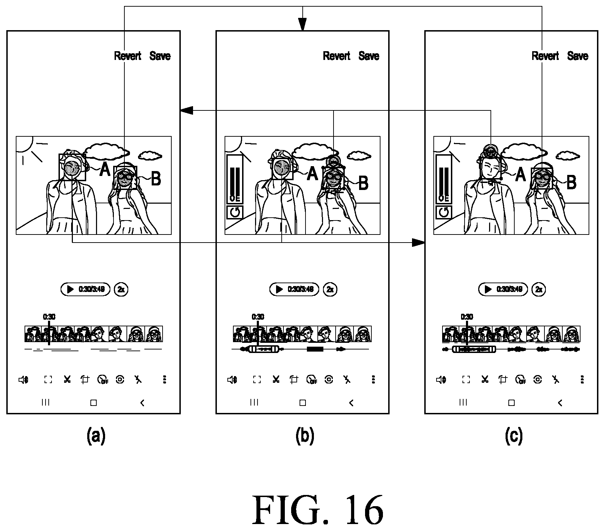

FIG. 16 is a view illustrating an example of voice information display according to edit target speaker selection according to an embodiment. In FIG. 16(a), when the user selects speaker A's region in a state in which the region (or guide box) indicating each speaker is displayed, as illustrated in FIG. 16(c), an object for deselecting speaker A and an object for adjusting the volume may be displayed. On the other hand, in response to an input of deselecting speaker B in FIG. 16(b), the electronic device 101 may remove the object for deselection and the object for volume adjustment not to be displayed as illustrated in FIG. 16(a). In the case, when the speaker selection is released, the speaker's volume may be initialized to a default volume.

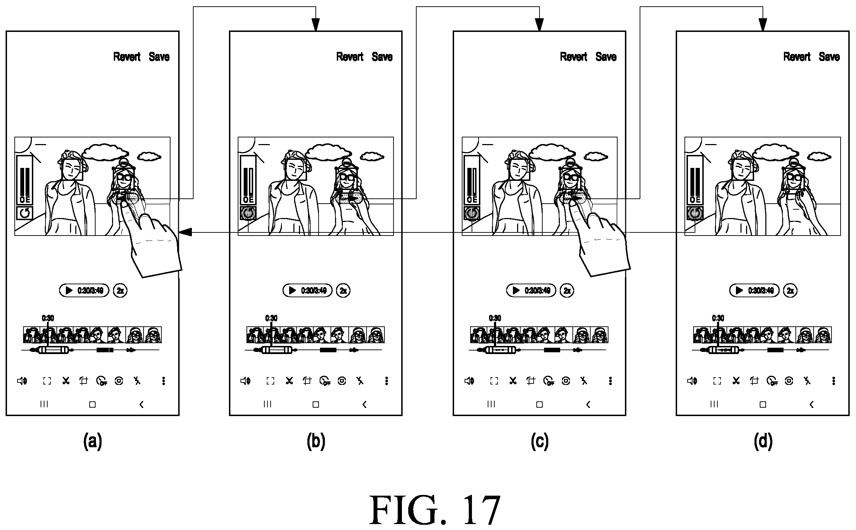

FIG. 17 is an example view illustrating a volume adjustment method for a selected speaker according to an embodiment.

Referring to FIG. 17(a), an object for volume adjustment is displayed when a speaker is selected, and the volume level of the selected speaker may be adjusted by touching and dragging the object. As illustrated in FIG. 17(b), an object representing an edited (or adjusted) volume level in which height is changed with respect to the original volume level included in the object representing the volume level may be displayed so that the user may visually recognize the adjustment circumstance according to the adjustment of the volume level. Further, when the volume level is adjusted by selecting an object for adjusting volume for the selected speaker in FIG. 17(c), an object with an increased volume level may be displayed as illustrated in FIG. 17(d). In the case, in FIG. 17(a) to FIG. 17(d), a reset object for controlling to return to the original volume level may be displayed.

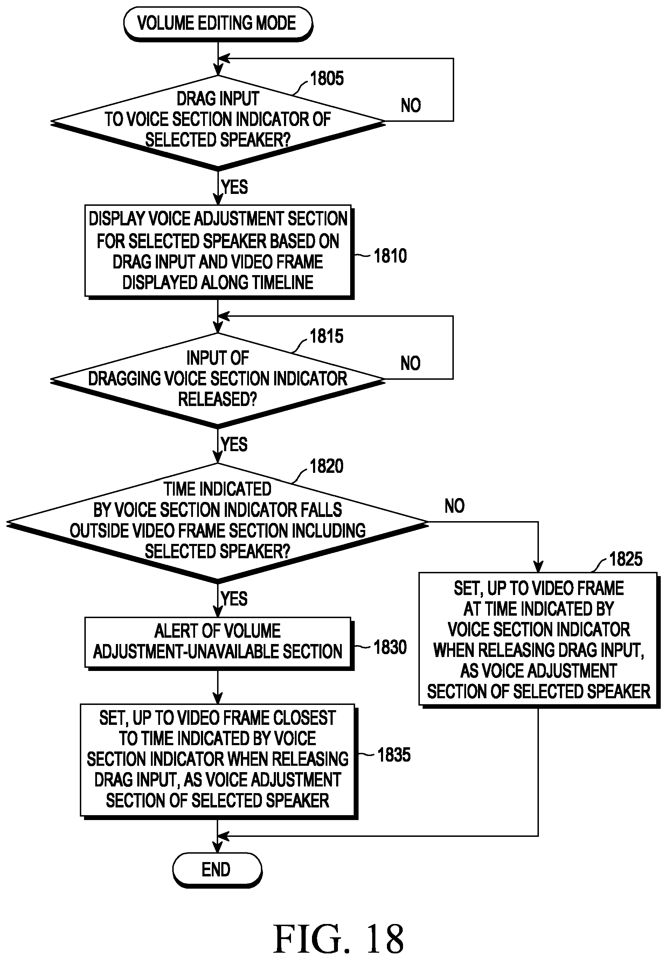

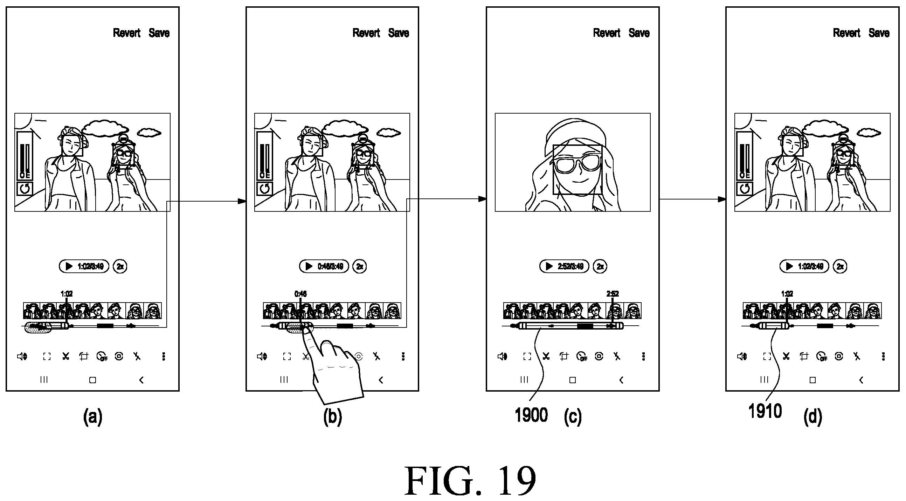

FIG. 18 is a flowchart illustrating operations for volume adjustment using a voice section indicator for a selected speaker according to an embodiment. To help understand the description in FIG. 18, it is described with reference to FIG. 19. FIG. 19 is an example view illustrating a volume adjustment method using a voice section indicator for a selected speaker according to an embodiment.

Referring to FIG. 18, in the volume editing mode, in operation 1805, the electronic device 101 may identify whether there is a drag input to the selected speaker's voice section indicator.

In response to identifying a drag input to the voice section indicator of the selected speaker, in operation 1810, the electronic device 101 may display a video frame displayed along the timeline and a volume adjustment section for the selected speaker based on the drag input.

As illustrated in FIG. 19(a), in a state in which any one of the plurality of speakers is selected, the user may set a volume adjustment section for the selected speaker using a voice section indicator related to the selected speaker. For example, assuming that the voice information section where the selected speaker appears in the video frames is a section from the first time (e.g., 0:30 seconds to the second time (e.g., 1:02 seconds), the length of the voice section indicator may correspond to the length of the section from the first time (e.g., 0:30 seconds) to the second time (e.g., 1:02 seconds).

If the voice section indicator is dragged to the right, with the left side thereof touched in FIG. 19(a), the start time of the voice information section may be changed from the first time (e.g., 0:30 seconds) to the third time (e.g., 0:46 seconds). In the case of volume adjustment to mute the selected speaker's voice, as illustrated in FIG. 19(b), the electronic device 101 may mute the selected speaker's voice in the section from the third time (e.g., 0:46 seconds) to the second time (e.g., 1:02 seconds).

In operation 1815, the electronic device 101 may identify whether an input for dragging the voice section indicator is released. In response to release of the input for dragging the voice section indicator, in operation 1820, the electronic device 101 may identify whether the time indicated by the voice section indicator falls outside the video frame section including the selected speaker. If the time indicated by the voice section indicator does not fall outside the video frame section including the selected speaker, in operation 1825, the electronic device 101 may set, up to the video frame at the time indicated by the voice section indicator when the drag input is released, as the volume adjustment section of the selected speaker.

On the other hand, when the time indicated by the voice section indicator falls outside the video frame section including the selected speaker, the electronic device 101 may alert that it is the section where voice adjustment is impossible in operation 1830. In operation 1835, the electronic device 101 may set, up to the video frame closest to the time indicated by the voice section indicator when the drag input is released, as the volume adjustment section of the selected speaker. According to an embodiment, the electronic device 101 may perform operation 1835 while alerting that it is the section where volume adjustment is impossible.

If the voice section indicator is dragged to the right with the right side thereof touched in FIG. 19(b), the end time of the voice information section indicated by the voice section indicator may fall outside the second time (e.g., 1:02 seconds). If the input of dragging the voice section indicator 1900 is moved to the fourth time (e.g., 2:52 seconds) in FIG. 19(c), the electronic device 101 may identify whether it falls outside the section where the selected speaker appears in the video frames. When falling outside the section where the selected speaker appears, the voice section indicator may no longer be dragged. In the case, when the voice section indicator is moved, the video frame indicator may also be moved.

As illustrated in FIG. 19(d), when the time indicated by the input dragging the voice section indicator 1900 falls outside the section where the selected speaker appears, the electronic device 101 may display the voice section indicator 1910 to indicate the last time (e.g., 1:02 seconds) of the video frame where the selected speaker appears. As such, the electronic device 101 may set, up to the last frame of the video frame including the selected speaker, as the volume adjustment section of the selected speaker.

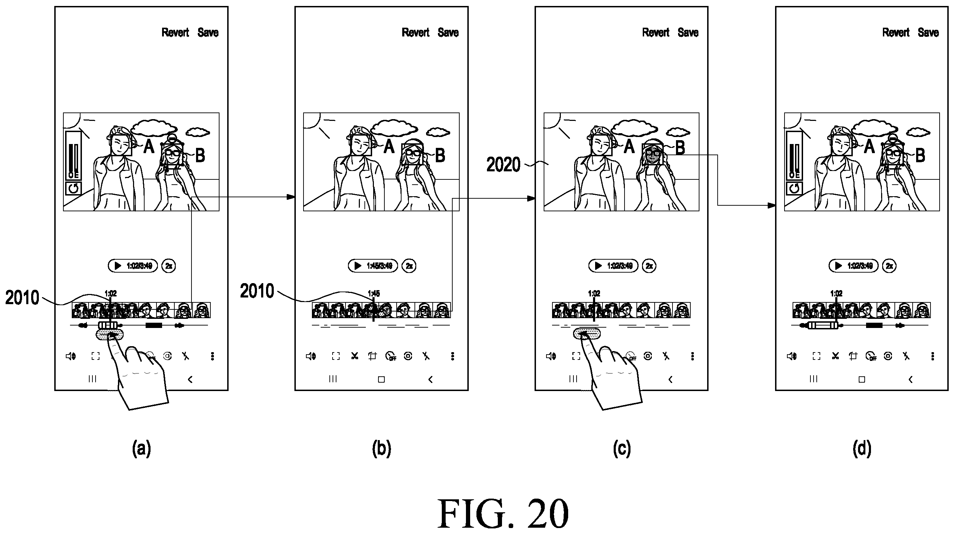

FIG. 20 is an example view illustrating a volume adjustment method using an video frame indicator according to an embodiment.

Referring to FIG. 20(a), the electronic device 101 may indicate the start time of the section where speaker B appears in the video frames using the video frame indicator 2010. In FIG. 20(a), it is assumed that the section where speaker B appears in the video frames is from the first time (e.g., 0:46 seconds) to the second time (e.g., 1:02 seconds). When the user mutes speaker B's voice using the volume adjustment bar and then drags the video frame indicator 2010 to the third time (e.g., 1:45 seconds) as illustrated in FIG. 20(b), the video frame indicator 2010 may be moved outside the section where speaker B appears. However, when the video frame indicator 2010 moves outside the section where speaker B appears, the volume adjustment section for speaker B may be displayed in an inactive state. Further, the electronic device 101 may display a preview image 2020 corresponding to the video frame indicated by the video frame indicator 2010 as illustrated in FIG. 20(c). For example, the preview image 2020 corresponding to the second time (e.g., 1:02 seconds) may be displayed. If speaker B is selected by the user in the preview image 2020, at least one of an object for volume adjustment for speaker B, an object indicating the current volume level according to volume adjustment, and a volume adjustment section of speaker B may be displayed as illustrated in FIG. 20(d).

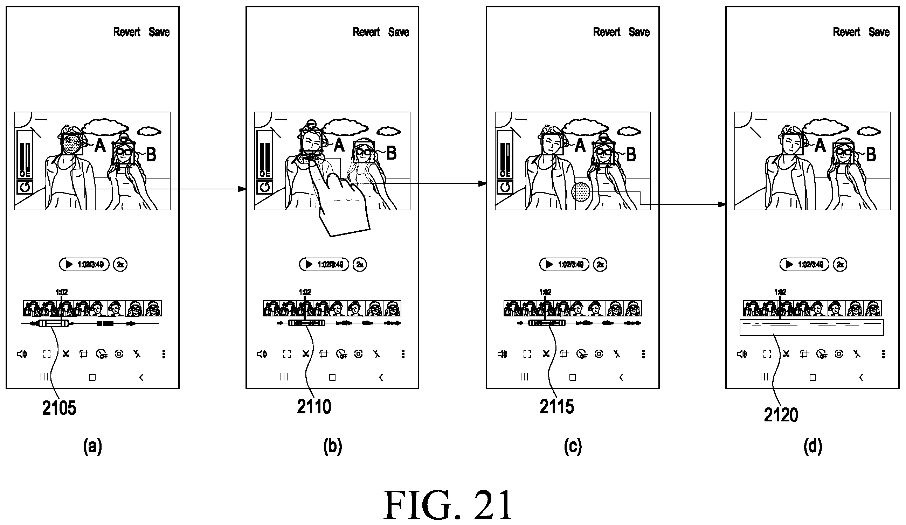

FIG. 21 is an example view illustrating voice information display according to sequential selection of a speaker according to an embodiment.

FIG. 21(a) illustrates an example where speaker B is selected as a volume adjustment target in a state in which speaker A and speaker B are recognized. If the volume of speaker B is adjusted to 0, the object 2105 representing the volume adjustment section may be displayed in a waveform with no change in magnitude, e.g., in the form of a dashed line. Further, if speaker A is selected, an object 2110 representing speaker A's volume adjustment section may be displayed as illustrated in FIG. 21(b). When the volume level of speaker A is lowered from 100 to 50 using the volume adjustment object, the magnitude of the waveform in the object 2115 representing the volume adjustment section of speaker A may also be displayed to decrease as illustrated in FIG. 21(c).

Meanwhile, when selecting a region other than regions (or guide boxes) representing speakers as illustrated in FIG. 21(c), the electronic device 101 may deactivate the selection of each of speakers A and B as illustrated in FIG. 21(d). According to an embodiment, when the volume adjustment for at least one of speaker A or speaker B is completed, the graphic elements (e.g., color, thickness) of at least some sections in the volume adjustment section corresponding to the respective speakers may be displayed differently to visually indicate that it is a volume-adjusted section.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, in a non-volatile storage medium storing instructions, the instructions may be configured to, when executed by at least one processor 320 of an electronic device 101, cause the electronic device to perform at least one operation. The at least one operation may comprise identifying a plurality of voice signals included in content, identifying a plurality of speakers in the video included in the content, matching the voice signals to the speakers, respectively, receiving a first user input to a volume control object related to a first speaker among speakers in the video displayed on a display of the electronic device, and adjusting a volume for the first speaker and maintaining a volume for a second speaker among the plurality of speakers in response to the first user input.

## Claims

1. An electronic device (101) comprising:
a display (360);
at least one processor (320); and
memory (330) storing instructions that, when executed by the at least one processor, cause the electronic device to:
identify a plurality of voice signals included in content;
identify a plurality of speakers in the video included in the content;
match the voice signals to the speakers, respectively;
receive a first user input for a volume control object related to a first speaker among speakers in the video displayed on the display; and
in response to the first user input, adjust a volume for the first speaker and maintain a volume for a second speaker among the plurality of speakers.

2. The electronic device of claim 1, wherein the instructions are configured to cause the electronic device to, in response to a second user input for a volume control object related to the second speaker, maintain the volume for the first speaker and adjust the volume for the second speaker among the plurality of speakers.

3. The electronic device of claim 1 or 2, wherein the instructions are configured to cause the electronic device to:
display regions respectively indicating the speakers in the video; and
in response to an input for selecting one region among the regions, display a volume control object for adjusting a volume for a speaker corresponding to the region on at least a portion of the display.

4. The electronic device of any one of claims 1 to 3, wherein the instructions are configured to cause the electronic device to, in response to an input for releasing selection of one region among regions respectively indicating the speakers in the video, initialize an adjusted volume for the first speaker to a default volume.

5. The electronic device of any one of claims 1 to 4, wherein the instructions are configured to cause the electronic device to:
display frames of the video on at least a portion of the display along a timeline; and
adjust the volume for the first speaker from a time selected on the timeline.

6. The electronic device of any one of claims 1 to 5, wherein the instructions are configured to cause the electronic device to:
display a voice section indicator indicating at least a portion of a voice section of the first speaker on the timeline; and
set a voice adjustment section of the first speaker based on an input of dragging the voice section indicator.

7. The electronic device of any one of claims 1 to 6, wherein the instructions are configured to cause the electronic device to:
identify a video frame section including the first speaker among frames of the video displayed along the timeline; and
adjust the volume for the first speaker for the video frame section including the first speaker.

8. The electronic device of any one of claims 1 to 7, wherein the instructions are configured to cause the electronic device to:
upon releasing the input of dragging the voice section indicator on the timeline, identify whether a time indicated by the voice section indicator falls outside a video frame section including the first speaker; and
in case that the time indicated by the voice section indicator falls outside the video frame section including the first speaker, set, up to a last frame of video frames including the first speaker, to a voice adjustment section of the first speaker.

9. The electronic device of any one of claims 1 to 8, wherein the instructions are configured to cause the electronic device to:
in response to an input of separating a video frame section including the first speaker, adjust the volume for the first speaker for at least a portion of a video frame section including the first speaker; and
maintain the volume for the first speaker for a rest of the video frame section including the first speaker.

10. The electronic device of any one of claims 1 to 9, wherein the instructions are configured to cause the electronic device to:
compare a volume for each of the speakers with a threshold in response to selection of an automatic volume adjustment function; and
adjust a volume exceeding the threshold to a designated volume.

11. A method for adjusting a volume for each speaker in an electronic device, the method comprising:
identifying a plurality of voice signals included in content;
identifying a plurality of speakers in the video included in the content;
matching the voice signals to the speakers, respectively;
receiving a first user input for a volume control object related to a first speaker among speakers in the video displayed on a display of the electronic device; and
in response to the first user input, adjusting a volume for the first speaker and maintaining a volume for a second speaker among the plurality of speakers.

12. The method of claim 11, further comprising, in response to a second user input to a volume control object related to the second speaker, maintaining the volume for the first speaker and adjusting the volume for the second speaker among the plurality of speakers.

13. The method of claim 11 or 12, further comprising:
displaying regions respectively indicating the speakers in the video;
in response to an input for selecting any one region among the regions, displaying a volume control object for adjusting a volume for a speaker corresponding to the region on at least a portion of the display; and
in response to an input for releasing selection of one region among regions respectively indicating the speakers in the video, initializing an adjusted volume for the first speaker to a default volume.

14. The method of any one of claims 11 to 13, further comprising:
displaying frames of the video on at least a portion of the display along a timeline;
displaying a voice section indicator indicating at least a portion of a voice section of the first speaker on the timeline;
setting a voice adjustment section of the first speaker based on an input of dragging the voice section indicator; and
adjusting the volume for the first speaker from a time selected on the timeline.

15. A non-volatile storage medium storing instructions configured to, when executed by at least one processor (320) of an electronic device (101), cause the electronic device to perform at least one operation, the at least one operation comprising,
identifying a plurality of voice signals included in content;
identifying a plurality of speakers in the video included in the content;
matching the voice signals to the speakers, respectively;
receiving a first user input for a volume control object related to a first speaker among speakers in the video displayed on a display of the electronic device; and
in response to the first user input, adjusting a volume for the first speaker and maintaining a volume for a second speaker among the plurality of speakers.
